# EUROPEAN PATENT APPLICATION

(11) **EP 4 647 483 A1**
(43) Date of publication of application: **12.11.2025**
(21) Application number: 24174365.7
(22) Date of filing: 06.05.2024
(51) Int. Cl.: C12G 1/02, B65D 8/00, C12G 1/06, C12H 1/22

(54) **HYBRID SYSTEM FOR PRODUCING ALCOHOLIC BEVERAGES UNDER CONSTANT PRESSURE**

(71) Applicant: Gantenbrink, Bruno Alexander, 58708 Menden (DE); Popa, Vitalie, 6811 Bardar, Ialoveni (MD)
(72) Inventor: Gantenbrink, Bruno Alexander, 58708 Menden (DE); Popa, Vitalie, 6811 Bardar, Ialoveni (MD)
(74) Representative: DTS Patent- und Rechtsanwälte PartmbB

(57) **Abstract**

A system for producing alcoholic beverages under constant pressure, in particular wine or beer, and a method for producing alcoholic beverages are provided. The system comprises a first container including a first chamber for storing raw materials and/or fermented materials; a second container including a second chamber for storing raw materials, alcoholic beverages and/or gases; wherein the first container and the second container are configured for fluid communication, in particular via an opening formed in the first container; and wherein the system, in particular the first container and the second container, is configured to continuously maintain a constant pressure, during chemical processes for producing the alcoholic beverages, in particular the chemical processes comprising maceration, fermentation, malolactic fermentation and/or aging. The present invention further provides for a method for producing alcoholic beverages under constant pressure.

## Description

The present invention relates to a system for producing alcoholic beverages or fermentable materials under constant, controlled pressure, preferably without adding additives and/or preservatives, and a method for producing alcoholic beverages under constant pressure, in particular using the system of the present invention.

Conventional barrels (e.g. conventional wooden or glass barrels including for example silicone bung) present several drawbacks that can impact the quality and integrity of stored contents. One significant concern is leakage, as wear and tear over time and poor sealing components in the construction of the barrels leads to the development of leaks, resulting in potential spoilage and loss of product. Conventional barrels experience pressure fluctuations during production processes and are unable to continuously maintain a constant pressure level, for example during fermentation, maceration and aging. This can disrupt chemical processes which, for example, may lead to inconsistent fermentation kinetics and incomplete conversion of sugars into alcohol or other desired by-products. Pressure variations can also affect the equilibrium of volatile compounds, leading to the formation of off-flavors or aromas in the final product. Furthermore, conventional barrels are not designed to withstand high pressures, especially concerning carbonated beverages or fermentation processes that generate significant gas. The risk of barrel rupture or leakage under excessive pressure poses a notable constraint in certain production scenarios.

The permeability of wood presents a risk of oxidation, as it allows oxygen to gradually penetrate the barrels, potentially compromising the flavor and quality of beverages. Another significant source of oxygen in the traditional barrels is leakages through the bunghole and gaps between the staves due to the poor construction of the barrels. For example, staves that are poorly held together by hoops that are fixed to the barrels with rivets intensity this issue. The presence of oxygen is particularly problematic in the case of wines and spirits, where oxidation can have a detrimental impact on their characteristics.

Another drawback of the conventional barrels arises from volume limitations, as barrels with fixed capacities restrict scalability. Larger production batches often necessitate the use of multiple barrels which introduces variability in the aging process.

It is therefore an object of the present invention to address the drawbacks and shortcomings in the existing barrels. In particular, the present invention aims to overcome the undesired (uncontrolled) pressure variations, leakage problems and the volume limitations.

This object is achieved in the present invention by a system for producing alcoholic beverages (e.g. wine or beer or spirits,) or any fermentable product under constant, controlled pressure and preferably by minimizing the use of additives and preservatives and more preferably without adding any additives and preservativesaccording to claim 1.

Accordingly, the system comprises:
- a first container including a first chamber for storing raw materials, e.g. vinicultural materials, brewing ingredients such as fruits, fruit juice, malted grains, grain mash, and/or fermented materials;
- a second container including a second chamber for storing raw materials, alcoholic beverages and/or gases;
- wherein the first container, in particular via an opening formed therein, is configured for fluid communication with and the second container;
- wherein the system, in particular the first container and the second container, is configured to continuously maintain a constant pressure during chemical processes involved in the producing the alcoholic beverages, in particular the chemical processes comprising maceration, primary fermentation, malolactic fermentation, aging and/or secondary fermentation.

The invention is based on the basic idea to produce alcoholic beverages or any fermentable products under constant, controlled pressure in a system with increased capacity (i.e. not limited to the volume of the conventional barrels) and ability to create a controlled atmosphere (e.g. without undesired oxygen contents). The system comprises a first container that defines a first chamber for storing raw materials and/or fermented materials, and a second container that defines a second chamber for storing raw materials, alcoholic beverages and/or food-graded gases. The first container is configured for fluid communication with and the second container via an opening formed therein. The second container is configured to be connected to the first container in a sealing manner. In other words, the second container (positioned upstream from the first container) is configured to seal the opening of the first container and to provide access to the contents within the first container. Specifically, the system of the present invention is configured to replace the conventional bung (including its functionality) by a second container (i.e. a bung becomes a tank with improved functionality). This, in turn, enhances (changes) the functionality of the conventional barrels in maintaining the quality and integrity of the alcoholic beverages (or the fermented contents) throughout the production and aging process, and addresses the constrains of volume and pressure. In the system of the present invention, in place of a bung, a second container (e.g. a tank) is connected to the barrel for sealing the barrel and for providing an additional volume which is in fluid communication with the barrel under a controlled atmosphere. The system of the present invention, e.g. the first container and the second container, is (are) configured to maintain a constant pressure continuously throughout the entire beverage-making process. Advantageously, the system of the present invention is configured to create a controlled atmosphere and is designed and equipped with fittings and/or ports to regulate factors such as temperature, humidity, air composition (including oxygen and carbon dioxide levels), and pressure within the system. In particular, the system is configured to maintain a pressure level of the system at a predetermined level during chemical processes involved in the producing the alcoholic beverages, such as maceration, primary fermentation, malolactic fermentation, aging and/or secondary fermentation.

In particular, the system is configured to maintain a constant positive or negative pressure level of ±0.5, ±0.4, ±0.2, or ±0.1 bar during chemical processes involved in producing the alcoholic beverages, such as maceration, fermentation, malolactic fermentation, and/or aging.

In particular, the hybrid system of the present invention is configured to maintain a first pressure level (e.g. a constant positive or negative pressure level) throughout the production of a first alcoholic beverage at a first temperature, e.g. a base wine, and to maintain a second pressure level throughout the production of a second alcoholic beverage, e.g. a sparkling wine, at a second temperature.

In particular, the hybrid system is configured to produce base wines (e.g. within the first and second containers), using a primary fermentation, at a first temperature between 15°C to 20°C and a first pressure level of for example, ±0.5, ±0.4, ±0.2, or ±0.1 bar, and continue to produce sparkling wines from the base wine (within the second container) using a secondary fermentation at a second temperature between 5°C to 12°C (e.g. 6 °C, 7°C, 8°C, 9°C, 10°C, 11 °C or 12°C) and a second pressure level of 3, 4, 5, 6, 7, 8, 9 or 10 bar.

In particular, the first and second containers of the hybrid system of the present invention are configured to be disconnected while preserving the pressure, temperature and the produced fermented material therein.

In particular, the second container, e.g. including a tapered bottom portion, is configured and/or designed to optimize the collection of sediment particles from a first type of alcoholic beverage (e.g. wine) produced in the system without adding additives or fining agents (e.g. the so-called the stabilization process but without the addition of fining agents).

For example, once the sediments in the second container transferred (entered) via the tapered portion of the second container, into the first container, a clear alcoholic beverage (e.g. a clear wine) is remained in the second container. Thereafter, the first container is configured to be detached from the second container under controlled pressure conditions (e.g. through an intermediate chamber quipped with valves). The second container is then configured to be filled with non-alcoholic beverages and/or alcoholic beverages (e.g. the wine from the first container or another type of wine).

The second container is further configured to produce a second type of alcoholic beverage (e.g. sparkling wine) at desired pressure and temperatures (e.g. at 5 bar and at 10°C).

Advantageously, the production of sparkling wines is performed in a cost- and timeefficient manner under controlled pressure (ensuring a constants pressure level) during the secondary fermentation process. The system is further configured to enhance the quality of the produced wine by minimizing or ideally eliminating the need for additives and preservatives.

The system of the present invention can be used for producing a new class of alcoholic beverages. For example, the system is configured to produce one type of alcoholic beverage in the first container and produce another type of alcoholic beverage in the second container. Alternatively, the system is configured to store another type of alcoholic beverage, non-alcoholic beverage, food-graded gas and/or a pressurized food-graded gas in the second container and facilitate a fluid communication with the first container at desired pressures under a controlled atmosphere as appropriate. The content of the second container is configured to be mixed with (introduced into), for example, another type of alcoholic beverage that is in the process of the production in the first container. This facilitates the pressurization of the first container and/or the production of alcoholic beverages with distinct, unknown, taste profiles and aromas. Further, the second container is configured to be pressurized, e.g. in dependent of the first container, to perform a secondary fermentation process for producing, for example, sparkling wines.

Advantageously, the hybrid system of the present invention comprises two separate containers (the first and second containers), each configured to create desired pressure and atmosphere for producing alcoholic beverages or fermented products. The inclusion of the second container further increases the volume capacity of the system compared to the conventional barrels, allowing for the production of larger batch sizes of alcoholic beverages (e.g. beer or wine). This is particularly of advantageous for commercial breweries or wineries looking to scale up production.

The system of the present invention, due to the provision of two distinct containers ( made, for example, from different materials), provides a unique hybrid system, that harnesses the benefits of wooden barrels (such as the permeability of wooden barrel, the ability to impart desirable flavors and aromas from the wood, e.g. vanilla, spice, and oak) while mitigating their limitations (such as high costs, the risk of microbial contamination if not properly maintained, the requirements for regular maintenance including cleaning and sanitization).

In particular, the system of the present invention, having two distinct and separate containers, enables to independently produce different types of alcoholic beverages in the first and second containers with different characteristics (flavor, aroma and taste).

In particular, the first chamber of the first container comprises a volume, e.g. ranging from 4 to 225 L and/or the second chamber of the second container comprises a volume, e.g. ranging from 15 to 1125 L.

For example, the first container of 4 L and the second container of 20 L, or the first container of 6 L and the second container of 20 of 25 L, or the first container of 225 L and the second container of 300, 500 or 1000 L; or the first container of 100 or 185 L and the second container of 150, 250 or 300 L.

In particular, the first container comprises a wooden barrel of a tube shape (e.g. a cylindrical body with a uniform diameter) or a cylindrical shape with a bulging area comprising a bung hole (an opening) and the second container comprises a metallic (e.g. stainless-steel) tank configured for fluid connection with the barrel via the bung hole.

In particular, the first container comprises a body including (constructed from) a plurality of staves securely held together and end elements (in particular barrel ends or barrel heads) configured to be attached to the free ends of the staves forming a first, closed chamber.

In particular, the first container further sealings (sealants, a rubber sealing rod), each disposed between neighboring staves. For example, the sealings comprise rubber bands configured to seal the gaps between neighboring staves.

In particular the body of the first container comprises a cylindrical body or a bulging body (i.e. the classical shape of the barrel including a cylindrical body with a wider diameter in the middle and narrower at the bottom and bottom).

In particular, the first container (e.g. the wooden barrel) of the cylindrical or tube shape comprises a body with a straight, uniform diameter throughout its length.

Producing conventional wooden barrels typically involves several key steps. Firstly, the staves are carefully selected and shaped to precise dimensions. These staves are then heated or steamed to make them pliable for bending. Next, the staves are assembled into a circular shape and secured using metal hoops. The assembled barrel is then toasted or charred to impart flavor to the wine during aging. Finally, the barrel is inspected for quality and may undergo additional finishing processes before being ready for use in wine production.

Advantageously, the use of cylindrical shape improves the barrel-making process by omitting the step of toasting. Also, the initial selection of staves is simplified due to the symmetrical cylindrical shape of the barrel. The step of steaming can be omitted as well as no further bending and/or shaping of the staves are required.

Further, it is known that the toasting step causes the natural sugars present in the wood to caramelize, imparting flavors and aromas to the wine or spirit aging in the barrel. In the absence of the toasting step therefore different chemical composition of wood is achieved, which is further enhances (or changes) the final taste and properties of the fermentable material within the barrel.

In particular, the first container further comprises hoops for circumferentially securing or holding the plurality of staves, each hoop comprising fasteners, in particular bolts, for adjusting (tightening and/or loosening) the hoops.

In particular, the system further comprises a plurality of pressure-sealing interfaces for interconnecting the first container with the second container and sealing openings formed on the first and/or the second containers.

In particular, the second container is configured to be disposed upstream from the first container and to be attached, in particular via an intermediate chamber, to the first container in a sealing manner, e.g. through the plurality of pressure-sealing interfaces provided between the first container, the second container and the intermediate chamber.

In particular, the system further comprises an intermediate chamber (e.g. a connecting chamber) that is configured to be in fluid communication with the first chamber of the first container and the second chamber of the second container for passage of fluids (in particular fermented materials, liquids and/or gases) therebetween. This allows a passage of fluids between the first container and the second container under controlled conditions.

In particular, the intermediate chamber is configured to be disposed between the first container and the second container along a longitudinal axis.

In particular, the system further comprises an interface device configured to interconnect the first container to an intermediate chamber in a sealing manner and provide a fluid communication between the intermediate chamber and the first container.

In particular, the interface device is configured to be mounted, at one end, in an opening formed in the first container (e.g. to be fixed to an interior of the first container) in a sealing manner, and to be attached, at an opposite end, to the intermediate chamber (e.g. through the plurality of pressure-sealing interfaces).

Advantageously, the interface device enables a reliable fluid communication between the first and second container while preserving the atmosphere and maintaining the pressure inside the system.

In particular, the interface device comprises a flange including a flange face portion and a shoulder portion (e.g. a raised, circumferential portion), a sealing element, and a fixing. For example, the flange face portion is configured to be connected to a corresponding flange in the intermediate chamber, the sealing element is configured to be disposed between the shoulder portion of the flange and the fixing element, and the fixing element is configured to secure (in a fixed position) the interface device within the opening of the first container.

In particular, the sealing element is configured to be sandwiched between the flange (e.g. the shoulder portion) and fixing element (e.g. a clamp portion of the fixing element).

In particular, the fixing element comprises a bolt and fixing clamp configured to be fastened to the sealing element (e.g. to the second contact surface of the sealing element) via the bolt.

In particular, the system further comprises a first filter element disposed in the first container and/or a second filter element disposed in the second container, wherein the first filter element and/or the second filter element, comprise e.g. a plurality of openings and, are configured to prevent solid raw materials and/or solid fermented materials from exiting the first container and the second container, respectively.

In particular, the first and second filters comprises a plurality of openings of a predetermined size to efficiently prevent the passage of solid contents contained in the first and second containers.

In particular, the filter element comprises a perforated disc or a perforated circular disc that is configured to be disposed inside the first container, for example between the intermediate chamber and the interface device.

In particular, the second filter element comprises a filter tube, wherein the second filter element is configured to be in fluid communication, in particular via openings on the filter tube, with the second chamber of the second container.

Alternatively or additionally, the second filter element comprises a filter tube, wherein the filter tube comprises an input channel for introducing the raw materials into the second chamber of the second container and a fluid channel for the passage of fluids into the first container. In particular the input channel and the fluid channel are configured to define distinct (and separate) channels within the second container.

In particular, the filter tube comprises openings or slits along its surface, e.g. in the form of a perforated conduit or a perforated filter tube.

In particular, the filter tube is configured to de disposed in the second container (and extend) along a length of the second container.

In particular the fluid channel is configured to be extended from an input end to an output end of the filter tube and/or the input channel is configured to be extended from an input end of the filter tube to an opening defined in a periphery wall of the filter tube.

In particular, the second container comprises a body portion, extending from an inlet opening to an outlet opening, and a neck portion extending from the body portion, e.g. at an inlet side.

In particular, the body portion and the neck portion define distinct and separate volumes communicating via the inlet opening.

In particular the outlet opening of the second container is configured to be fluidly connected to the first container, e.g. via an intermediate chamber (and therewith connected a plurality of pressure-sealing interfaces).

In particular, the second filter element, in particular a filter tube, is configured to be disposed in the second container, extending from the inlet opening to the outlet opening.

In particular, the body portion of the second container comprises a cylindrical body, rectangular or spherical body, preferably made of metals.

In particular, the body portion of the second container comprises a cylindrical body portion integrally connected to a tapered body portion (a cone portion).

In particular, the inlet opening is formed in the cylindrical portion and the outlet opening is formed in the tapered portion, wherein the tapered portion is configured to be connected to the first container, preferably via an intermediate chamber.

In particular, the system further comprises a first closure element for sealing the neck portion to prevent leakage or contamination of (the volume defined in) the neck portion and a second closure element for sealing the input end of the filter element.

In particular, the second filter element, in particular a filter tube, comprises an input end configured to be terminated (disposed) in (the volume defined) in the neck portion of the second container and an output end configured to be terminated (disposed) in an intermediate chamber or the intermediate chamber disposed downstream from the second container.

In particular, the intermediate chamber is configured to define a first intermediate chamber between the second container and the first container, wherein the second filter element, e.g. a filter tube, comprises an output end or the output end terminating in the first intermediate chamber.

Alternatively, the intermediate chamber comprises a first flow control element (e.g. a flow control valve or a gate valve) and a second flow control element configured for controlling (e.g. block, prevent) the passage of fluids between the first container and the second container, wherein the second flow control element and the second container are configured to define a third intermediate chamber therebetween, and wherein the second filter element, in particular a filter tube, comprises an outlet end or the outlet end terminating in the third intermediate chamber.

In particular, wherein the first flow control element and the second flow control element are configured to define a third intermediate chamber therebetween.

In particular, the first flow control element and the interface device define a forth intermediate chamber.

In particular, the first gate valve and the second gate valve being configured to seal (close or shut) the first container and the second container, respectively.

In particular, the system further comprises a plurality of ports disposed in the first container and/or the second container and/or intermediate chamber, wherein the plurality of ports comprises an inlet port for introducing gasses or liquids into the system and a pressure safety port for accommodating a pressure relief valve.

In particular, the second container comprises at least one port formed in the body portion or in the tapered portion.

In particular, the second container is configured to comprise a plurality of ports (as mentioned above) formed in the body portion, tapered portion and/or neck portion as appropriate.

In particular, the intermediate chamber comprises at least one port or fitting to discharge air from the chamber and/or to introduce gasses/liquids into the intermediate chamber.

In particular, the plurality of ports further comprises a sensor port for accommodating a temperature sensor or a pressure sensor and/or a sample port for extracting samples of the fermented materials in the first containers and/or second container.

In particular, the system further comprises at least one temperature control element configured to control temperature of the first container and/or the second container.

In particular, the temperature control element is configured to be inserted into an interior of the first container or mounted onto an exterior of the second container for cooling or heating the content included in the first and second containers, as desired.

For example, the temperature control element comprises a cooling or heating sleeve or jacker that is configured to be attached to the exterior of the second container for cooling or heating the second container as desired.

For example, the temperature control element is configured to generate and maintain temperatures between 5 to 20 °C.

Advantageously, the inlet port facilitates the controlled introduction of gases or liquids into the system, ensuring precise control over process parameters. It enables the addition of ingredients or additives at specific stages, allowing for customization and optimization of the final alcoholic beverage or final fermented product.

The pressure safety port safeguards the system from over-pressurization and ensures operational safety by releasing excess pressure during the beverage-making process.

The sensor port allows for the integration of temperature and pressure sensors directly into the system, enabling real-time monitoring and feedback control. The sample port provides a convenient access point for retrieving samples of fermented materials during the production process without jeopardizing the given atmosphere within the first and the second containers, e.g. by introducing air to the system.

The temperature control element offers precise control over the temperature within the first and second containers, ensuring optimal conditions for fermentation or other processes.

In particular, the second container is configured to be filled with food-grade gases up to a predetermined pressure for pressurizing the first container and/or for producing sparkling alcoholic beverages.

In particular the system (e.g. the hybrid system including the wooden first container and the stainless steel second container) is configured to perform chemical processes such as maceration, fermentation, malolactic fermentation and/or aging under a controlled, predetermined pressure and temperature. Advantageously, the second container is further configured to perform a secondary fermentation process under a controlled, predetermined pressure and temperature

In particular, the system, preferably the second container, further comprises a support structure for positioning the second container with respect to the first container and for providing stability to the second container.

In particular, the system may further comprise at least one second inlet configured to be connected to a heating heat or cooling element for heating, respectively, cooling liquids and/or gases entering into the system, in particular into the first and/or second device.

In particular, the system further comprises at least one second outlet configured to heat and/or cool liquids and/or the produced alcoholic beverages exiting the system, in particular exiting from the first and/or second device.

In particular, the at least one second input and the at least on second output are attached to the system, in particular to the first container and/or the second container, in a sealing manner.

The system may further comprise a sparger device configured to introduce gases into a liquid volume contained in the first container and/or second container, preferably the sparger device is configured to be arranged within the at least one port.

In particular, the sparger device comprises a tube and a filter, wherein the tube is configured, at one end, to be connected to one port, and at another end, to be connected to the filter.

In particular, the system of the present invention enables to produce different types of alcoholic beverages having different flavor and aroma under positive or negative pressure without the need for adding additives and/or preservatives.

The present invention further relates to a method for producing alcoholic beverages or any fermented products under a controlled, constant pressure, in particular using the system as outlined above. The method comprising the steps of:
- optionally, providing a system comprising a first container fluidly connected via an intermediate chamber to a second container,
- placing raw materials into a first container via an opening or head elements of the first container,
- placing raw materials and/or alcoholic beverages and/or fluids and/or gases into a second container via an input channel included in the second container,
- sealing the first and second containers,
- creating (and/or maintaining) a predetermined pressure in the system for performing chemical process, in particular maceration, fermentation, malolactic fermentation and/or aging under the predetermined pressure,
- optionally, pressurizing or depressurizing the system via at least one port formed in the first container and/or the second container,
- optionally, adjusting a temperature of the system via a temperature control element included in the system,
- optionally, monitoring the internal conditions of the system using monitoring elements included in the first container and/or the second container and adjusting the temperature and humidity as necessary to maintain optimal conditions.

The present invention further relates to a method for producing sparkling alcoholic beverages (e.g. sparkling wines) using the system of the present invention. The method comprises the steps of:
- Producing a base wine in the first container fluidly connected to the second container of the system under a controlled atmosphere and a desired pressure, in particular using the above method for producing alcoholic beverages;
- Disconnecting the first container (e.g. the wooden barrel) and the second container (e.g. the stainless-steel tank) under a controlled atmosphere, preferably through the intermediate chamber;
- Optionally, filling the first container or the second container with a further an alcoholic beverage and/or a non-alcoholic beverage (e.g. the base wine form the first container), preferably through the ports provided in the second container,
- Adding a mixture of sugar and yeast into the first container, introducing the base wine from the first container into bottles and performing secondary fermentation of the base wine in the bottles;
- Additionally or alternatively, adding a mixture of sugar and yeast into the second container and preforming secondary fermentation of the base wine in the second container under a controlled atmosphere and desired pressures and temperatures.

In particular, the system of the present invention is configured to be used in a method for producing sparkling wine, which involves two main fermentation stages (i.e. a primary fermentation and a secondary fermentation) in a more simplified and efficient manner at one run and under a controlled atmosphere and a constant pressure level without the need for adding additives of preservatives.

Producing sparkling wine involves a meticulous process. Once harvested, the grapes are transported to the winery where they undergo crushing to extract their juice. This juice then undergoes primary fermentation, where yeast converts the sugars into alcohol. This initial fermentation usually takes place in vats or stainless-steel tanks and results in a still base wine. Following primary fermentation, blending may occur to achieve the desired flavor profile and characteristics. Winemakers may combine different grape varieties and vintages to create a balanced and consistent wine. The base wine is then prepared for secondary fermentation.

Secondary fermentation is a crucial step in sparkling wine production and can be carried out using different methods. In the Metodo Martinotti (or Charmat method), secondary fermentation takes place in a pressurized tank. The base wine is transferred to a sealed tank along with a mixture of sugar and yeast. Carbon dioxide is produced during fermentation, creating bubbles that dissolve into the wine.

Alternatively, the Méthode Champenoise (or Traditional method), involves secondary fermentation in individual bottles. The base wine is bottled with a mixture of sugar and yeast, known as the liqueur de tirage. The bottles are sealed and laid horizontally to ferment, trapping carbon dioxide within the bottle and creating bubbles.

After secondary fermentation, sparkling wine may undergo aging to develop complexity and depth of flavor. In the Traditional method, bottles undergo riddling to collect yeast sediment, followed by disgorgement to remove the sediment. Throughout the entire process, careful attention to detail and adherence to specific methods ensure the desired level of effervescence, flavor, and quality in the final product.

Advantageously, the present invention helps to enhance the efficiency of the known methods for producing sparkling, while ensuring reliability as well as time and cost efficiency.

In particular, after primary fermentation the first and second containers are configured to be disconnected without jeopardizing the controlled atmosphere and pressure within the first and second containers. Thereafter, the secondary fermentation (under desired pressures and temperatures) can be independently performed in (via) the second container (i.e. the stainless-steel tank) according to the Charmat method and in (via) the first container (i.e. wooden barrel) according to the Traditional method.

In particular, the use of the hybrid system according to the present invention enables to perform the above methods of procuring sparkling wine from one single batch, i.e. the base wine contained (or produced) in the first container (i.e. wooden barrel) and in the second container (i.e. the stainless-steel tank). Advantageously, the hybrid system enhances the volume capacity of the known barrels in that the known bung is replaced by a tank with improved functionality. In addition, in the hybrid system the poor constructions of the known barrels (suffering from leakage and contaminations through the bung hole) is improved through the provision of sealed connections between the tank and the barrel.

In particular, the present invention provides for a novel and efficient method for producing sparkling wine without any additives or preservatives.

In particular, the system and method of the present invention allow for precise control over the conditions of producing alcoholic beverages (or any fermentable products), ensuring continuous pressure in a controlled atmosphere and consistency throughout the production process.

It is schematically shown in
- **Fig. 1**: a cross-sectional view of a system according to the present invention;
- **Fig. 2**: a cross-sectional view of a system according to the present invention;
- **Fig. 3**: a 3D representation of a system according to the present invention;
- **Fig. 4**: a 3D representation of a system according to the present invention;
- **Fig. 5**: an interface device included in the system of the present invention;
- **Fig. 6:**: an exemplary partial side view and top view of the second filter element that is configured to be disposed in the second container;
- **Fig.** 7: an exemplary view of a second container for the system of the present invention;
- **Fig.** 8: a flowchart illustrating a method for producing alcoholic beverages or fermented products, in particular using the system of the present invention; and
- **Fig.** 9: a flowchart illustrating a method for producing sparkling wine using the system of the present invention.

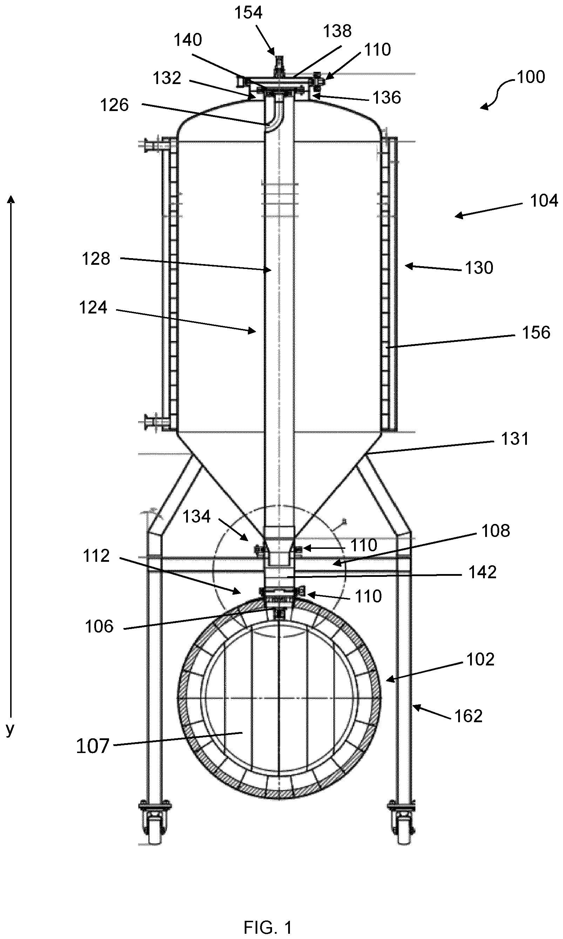

In **Fig. 1** a cross-sectional view of the system 100 for producing alcoholic beverages under constant pressure is illustrated.

The system 100 comprises a first container 102 and a second container, wherein the first container 102 and the second container 104 are fluidly connected to each other in a sealing manner.

The first container 102 comprises a first chamber (e.g. defining a volume) for storing raw materials, such as vinicultural materials, brewing ingredients including fruits, fruit juice, malted grains, grain mash and/or fermented materials.

Additional ingredients, such as yeast, adjuncts, water, preservatives, or additives, may be introduced into the first chamber based on the specific requirements of the alcoholic beverages being produced

The system 100 further comprises a second container 104. The second container 104 comprises a second chamber for storing raw materials, alcoholic beverages and/or gases (e.g. food-graded gases).

The first container 102 comprises an opening 106 (a bung hole) configured for fluid communication with the second container.

The system further comprises a plurality of pressure-sealing interfaces 110 for interconnecting the first container 102 with the second container 104 and sealing openings formed in the first and/or the second containers.

The first container 102 and the second container 104 are configured to maintain a constant pressure level continuously, e.g. through the plurality of pressure-sealing interfaces 110 provided in the system.

For example, the system is configured to maintain a positive over pressure within the range of e.g. 0.1 to 0.5 bar or a negative pressure within the range of e.g. -0.1 to -0.5 bar during the chemical processes involved in producing the alcoholic beverages (e.g. requiring a primary fermentation process).

Other pressure ranges (e.g. 3 to 10 bar) are also feasible depending on the product to be produced. For example, the second container 104 of the system is configured to maintain these higher pressures for producing sparkling wines during a secondary fermentation process.

The chemical processes, for example, comprise maceration, fermentation, malolactic fermentation and/or aging.

The first chamber of the first container 102 comprises a volume ranging from e.g. 4 L to 225 L.

The second container 104 comprises a volume ranging from 15 L to 1000 L.

For example, the first container 102 has a 225 L capacity and the second container 104 has a 300 L capacity.

For example, the first container 102 has a 100 L or 185 L capacity and the second container 104 has a 300 L capacity.

For example, the first container 102 has a 4 L capacity and the second container 104 has a 20 L capacity.

In particular, the system 100 comprises a hybrid system. For example, the first container 102 comprises a wooden barrel comprising a bung hole (an opening 106) and the second container 104 comprises a metallic (stainless-steel) tank configured for fluid connection with the barrel via the bung hole.

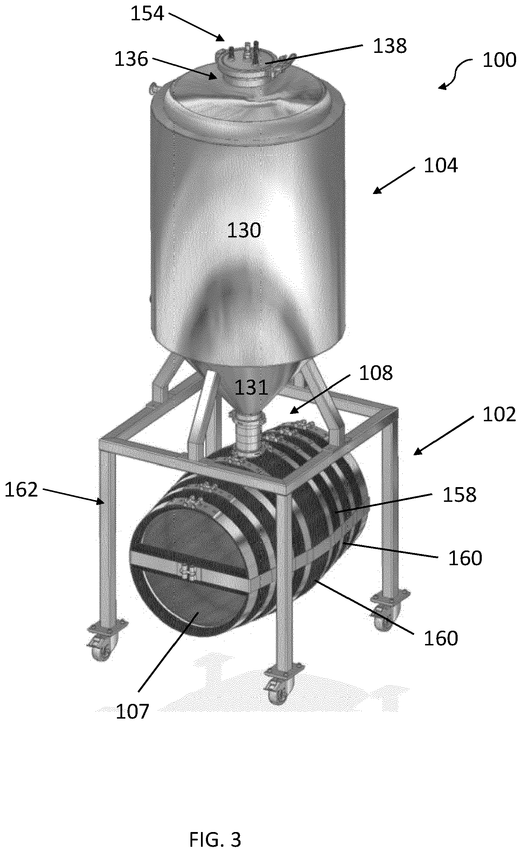

For example, the first container 102 comprises a body 158 (shown in Fig. 3) including (constructed from) a plurality of staves securely held together and a pair of head elements 107 (in particular barrel ends or barrel heads) configured to be attached to the free ends of the staves forming a first, closed, chamber.

In particular, the head elements are made from a material selected from the group comparing wood, stainless steel, and plastic (e.g. a transparent plastic (polymethyl methacrylate).

In particular, the plurality of staves comprises wooden staves or a combination of wooden staves and metallic staves.

For example, the barrel comprises one metallic stave that is equipped with a plurality of ports, such as an inlet/out port, and/or a safety port and/or a sensor port and/or a sample port.

In particular, the body of the first container 102 comprises a cylindrical barrel or a bulging barrel.

For example, the bulging barrel comprises a wider diameter in the middle than at the ends, i.e. the barrel has a bulging or curved appearance.

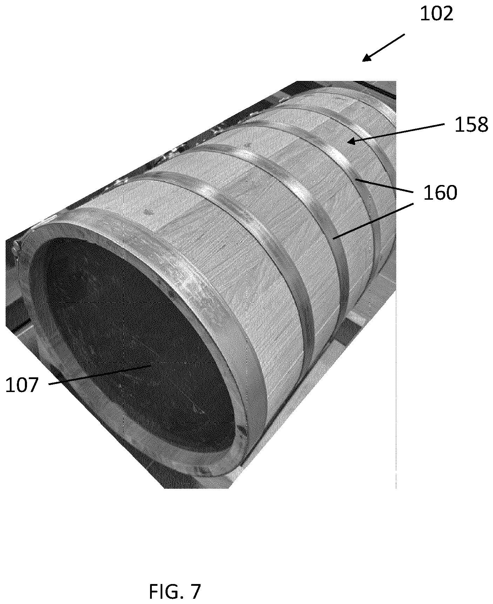

For example, the cylindrical barrel comprises a body with a straight, uniform diameter throughout its length (see Fig. 7).

Advantageously, by using a barrel of a cylindrical shape the barrel-making process is improved (simplified) as the step of toasting is not any more required.

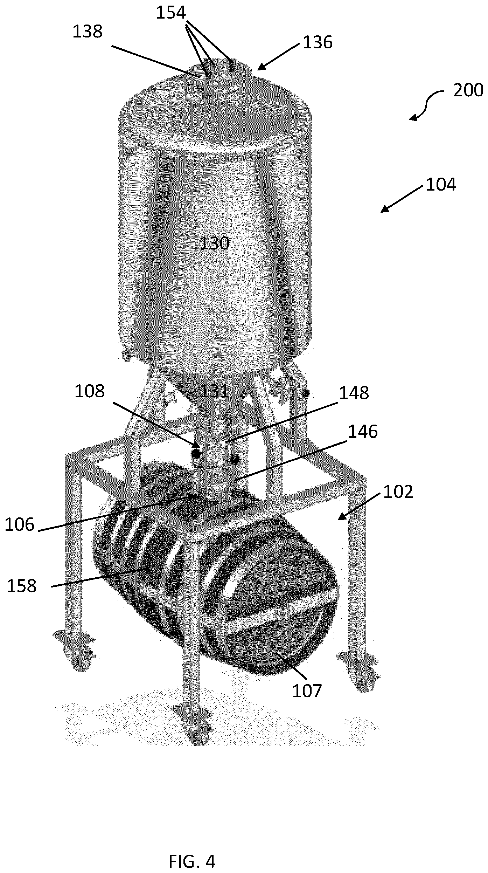

The first container 102 further comprises metal hoops 160 (shown in Figs. 3 and 4) for securing the plurality of staves circumferentially. Each hoop 160 is equipped with fasteners, e.g. bolts or other suitable fasteners, for tightening and/or loosening the hoops.

The first container 102 further comprises sealing elements (not shown) configured for sealing a gap between two neighboring staves.

The second container 104 comprises a (cylindrical) body portion 130, extending from an inlet opening 132 to an outlet opening 134.

The second container 104 further comprises a neck portion 136 outwardly extending from the body portion at an inlet side.

The body portion and the neck portion 136 of the second container 104 define distinct and separate volumes (chambers) that are configured to communicate via the inlet opening.

The hybrid system further comprises a first closure element 138 (a flange) for sealing the neck portion 136 to prevent leakage or contamination of the volume defined in the neck portion 136.

The second container 104 is configured for fluid connection with the first container 102.

For example, the system further comprises an intermediate chamber 108 which is disposed, along a longitudinal axis Y, between the first and second containers. The intermediate chamber 108 is configured to define a passage for fluid flow between the first and second containers.

For example, the outlet opening 134 of the second container 104 is configured to be fluidly connected, via the intermediate chamber 108, to the opening 106 of the first container 102.

In particular, pressure-sealing interfaces 110 are disposed (provided) at interfaces (contacting surfaces or edges) between the first and second container with the intermediate chamber. For example, a pressure-sealing interface 110 is provided at the outlet end of the second container 104.

The body portion comprises, e.g. a cylindrical body portion 130 seamlessly joined to a tapered body portion 131 (e.g. forming a cone tank).

The inlet opening 132 of the second container 104 is formed in the cylindrical body portion 130 and the outlet opening 134 of the second container 104 is formed in the tapered body portion 131 of the second container 104.

The tapered body portion 314 is configured to be connected, via the intermediate chamber 108, to the first container 102 (e.g. the barrel).

Fig. 1 further shows that the second container 104 is configured to be disposed upstream from the first container 102. For example, the system comprises a support structure 162 (e.g. a metallic stand including wheels) for positioning the second container 104 on top of the first container 102 and for providing stability to the second container 104 and the system.

The interfaces between the intermediate chamber 108 with the first and second chambers 102, 104 are sealed using the plurality of pressure-sealing interfaces 110.

The system further comprises an interface device 112 configured to interconnect the first container 102 to the intermediate chamber 108 in a sealing manner.

The interface device comprises at least one port for fluid communication, via intermediate chamber 108, with the first container.

The interface device 112 is configured to be mounted, at one end, in the opening 106 (e.g. the bung hole) formed in the first container 102. For example, the interface device 112 is configured to be sealingly fixed to the interior of the first container 102 at one end.

At the opposite end, the interface device 112 is configured to be attached to the intermediate chamber 108 through the plurality of pressure-sealing interfaces 110.

For example, the interface device 112 comprises a multi-port device or a one-port device configured to be connected to the second container 104, e.g. via the intermediate chamber, in a sealing manner, wherein the multi-port device or the one-port device is configured to accommodate the at least one first inlet port and the at least one second outlet port.

The interface device 112 of the system further comprises at least one sensor for measuring a pressure and/or temperature within the first container 102 and/or the second container,

In particular, the system further comprises a temperature sensor for measuring a temperature within the first container 102 and/or the second container.

In particular, the system further comprises a pressure sensor for measuring a pressure within the first container 102 and/or the second container.

The system further comprises at least one pressure relief valve configured to regulate internal pressure during the chemical process, in particular to release excess pressure when it exceeds a predetermined pressure.

The system further comprises a first filter element (not shown) that is configured to be disposed in the first container.

For example, the first filter element comprises a perforated disc or a perforated circular disc. The first filter element is configured to be disposed between the intermediate chamber 108 and the interface device 112 to thereby prevent solid raw materials and/or solid fermented materials from entering into the intermediate chamber 108.

The system further comprises a second filter element 124 that is configured to be disposed in the second container 104. The second filter element 124 is configured to prevent solid raw materials and/or solid fermented materials and/or particles from exiting the second container 104.

For example, the second filter element 124 comprises a filter tube or a filter sleeve disposed along a length of the second container 104. The filter tube in a mounted state extends from the inlet opening 132 to the outlet opening 134 of the second container 104.

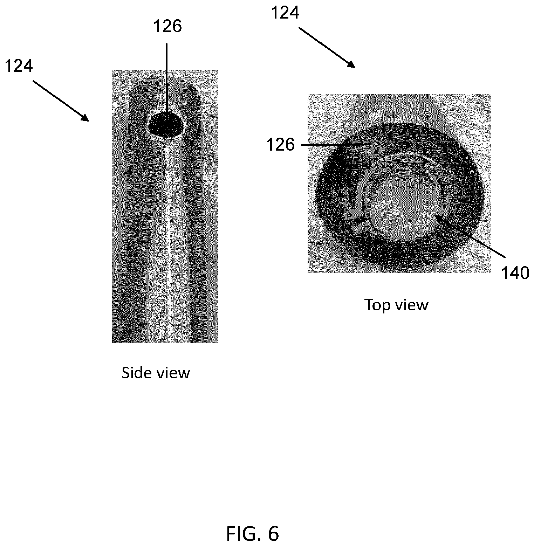

For example, the filter tube 124 comprises openings (visible in Fig. 6) along its surface, e.g. in the form of a perforated conduit or a perforated tube.

In particular, the filter tube 124 is configured to be disposed in the second container 104 (and extend) along a length of the second container,

The filter tube 124 is configured to be centrally positioned in the second container 104 such that the second chamber of the second container 104 is configured to encircle (surrounds) the filter tube and to be in fluid communication with a lumen of the filter tube, e.g. via the openings provided on the filter tube.

The filter tube 124 comprises an input channel 126 for introducing the raw materials into the second chamber of the second container 104 and a fluid channel 128 configured to define a passage for fluids to flow between the first and second containers.

The input channel 126 and the fluid channel 128 are configured to define distinct and separate channels within the second container 104, i.e. within a lumen of the filter tube 124.

As shown in Fig. 1, the fluid channel 128 (e.g. a straight tube) is configured to be extended from an input end to an output end of the filter tube and the input channel 126 (e.g. a bent or curved tube) is configured to be extended from an input end of the filter tube to an opening defined in a periphery wall of the filter tube.

The second filter element 124, e.g. the perforated filter tube, comprises an input end and an output end.

The input end of the second filter element 124 is configured to be terminated (disposed) in the volume defined in the neck portion 136 of the second container 104 and the output end of the filter element 124 is configured to be terminated (disposed) in the intermediate chamber 108 disposed downstream from the second container.

Now turning to the intermediate chamber 108, this chamber is configured to define a first intermediate chamber 142 between the second container 104 and the first container, wherein the filter tube, e.g. the output end of the filter tube, is configured to be disposed in the first intermediate chamber 142.

The system further comprises a second closure element 140 for sealing the input end of the filter element 124.

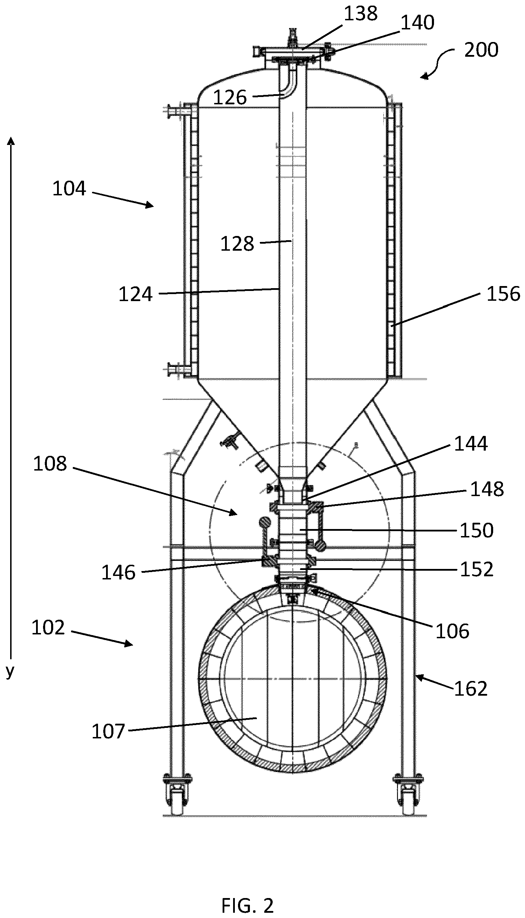

**Fig. 2** illustrates a cross-sectional view of another example of the system 200 according to the present invention.

The system 200 shown in Fig. 2 shares substantially the structural and functional characteristics of the system 100 indicated in Fig. 1, hence similar reference signs have been used for clarity.

The system 200 comprises a first container 102 communicating via an intermediate chamber 108 with a second container 104.

The first container 102, the second container 104 and the intermediate chamber 108 are attached using pressure-sealing interfaces 110. The system 200 is configured to maintain a predetermined pressure as desired during the alcoholic beverage-making process.

The system 200 further comprises an interface device 112 disposed within an opening 106 (e.g. a bung hole) in the first container 104. The interface device is configured to be attached to the intermediate chamber 108 in a sealing manner.

The system 200 shown in Fig. 2 differs from the system 100 of Fig. 1 in that the system 200 further comprises flow control elements 146, 148.

For example, a first flow control element 146 (e.g. a flow control valve or a gate valve) and a second flow control element 148 that are disposed within the intermediate chamber 108 for controlling (e.g. preventing) the passage of fluids between the first container 102 and the second container 104.

The first gate valve 146 and the second gate valve 148 are configured to seal (close or shut) the first container 102 and the second container 104, respectively. This enables a secure disconnection of the second container 104 from the first container 102.

For example, the first and second containers 102, 104 can be separately transported or replaced as desired. In particular, it is possible to continue the production of alcoholic beverages in the first container 102 and/or the second container 104.

For example, the second container 104 can be replaced by another container that stores (contains) a different alcohol beverage than the first container. In this way, it is possible to combine different beverages and create new beverages with new features and tastes.

For example, upon production of wine in the system 200, the second container 104 is configured to be disconnected from the first container 102 under a controlled conditions (i.e. without compromising the quality of the produce wine). The second container 104 is further configured to produce sparkling wine under pressure and temperatures as required to conduct a secondary fermentation.

The system 200 is further configured to facilitate addition of, for example, yeast, sugar and/or other beverages into the second container 104 through a plurality of ports 154 provided in the second container 104.

The temperature of the system, in particular, the second container 104, is controlled by the temperature control elements (including heating/cooling elements).

Turning now to Fig. 2, the second flow control element 148 and the second container 104 are arranged such that a third intermediate chamber 144 is created between them, with the second filter element 124 terminating at the outlet end within this third intermediate chamber 144.

In addition, the first flow control element 146 and the second flow control element 148 are configured to define (create) a third intermediate chamber 150 therebetween.

The first flow control element 146 and the interface device 148 are configured to define a forth intermediate chamber 152 (with pressure-sealing interfaces 110).

The second container 104 is configured to be filled with food-grade gases up to a predetermined pressure to pressurize the first container 102 during, for example, aging process after a primary fermentation, or to produce sparkling beverages through a secondary fermentation process in a disconnected state from the first container.

The 100, 200 is configured for performing the chemical processes, such as maceration, fermentation, malolactic fermentation and/or aging, under a controlled, predetermined pressure.

The system 100, 200 according to the present invention (as shown in Fig. 1 and 2) further comprises a plurality of ports 154 (multiple ports) that are attached to the first container 102 and/or the second container 104 in a sealing manner.

These ports, for example, comprise an inlet port for introducing gases or liquids, a pressure safety port for accommodating a pressure relief valve, a sensor port for housing temperature or pressure sensors, and/or a sample port for extracting fermented material samples from either container.

Furthermore, the system incorporates at least one temperature control element 156 designed to regulate the temperature within the first and/or second container.

The at least temperature control element 156 (e.g. a cooking or heating jacket) is configured to be affixed, respectively, to the exterior of the first and second containers, with functionality to either cool or heat the first and second containers. In this way, it is possible to precisely regulate temperature during the chemical processes like fermentation or chemical reactions.

The at least one temperature control element is configured to be inserted into the first container 102 and/or the second container. For example, the temperature control element is in the form of a tube configured for fluid circulations (coolant fluids or heating fluids).

Advantageously, the provision of ports integrated into the system 100, 200 provides enhanced functionality by facilitating controlled introduction of materials, real-time monitoring of critical parameters, and convenient access for sampling. This contributes to improved process control, safety, and quality assurance, ultimately leading to more efficient and reliable operations and higher-quality the produced beverages. For example, the provision of temperature control elements enhances stability of the beverage-making process and its repeatability, leading to improved quality of the produced alcoholic beverages

**Fig. 3** and **Fig. 4** each indicate a perspective 3D view of the systems 100, 200 shown in Fig. 1 and Fig. 2, respectively.

In both figures a wooden barrel is shown connected via a bung hole to a stainless-steel tank. In other words, the convention bung is replaced by a tank. This configuration provides for additional volume capacity for the barrel (i.e. increases the volume of the barrel).

Advantageously, the system of the present invention allows for enhanced flexibility in the design of the alcoholic beverage-making process, accommodating adjustments tailored to specific requirements or variations in both raw materials and fermented materials. This flexibility extends to the choice of grape varieties, grains, or other base ingredients, as well as variations in the type of alcoholic beverage being produced.

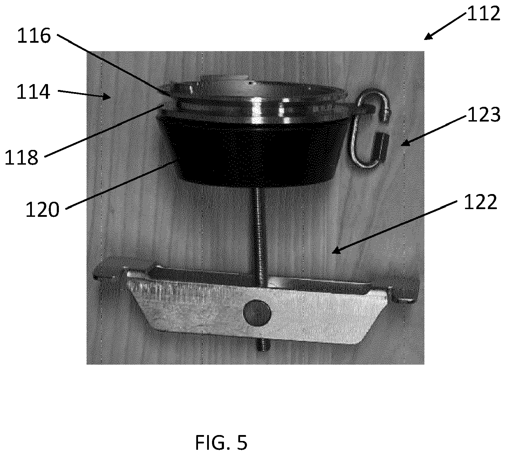

In **Fig. 5** an example of the interface device 112 for sealing an opening 106 of the first container 102 is illustrated.

The interface device 112 comprises a flange 114. The flange 114 comprises a flange face portion 116 and a shoulder portion 118 (a raised, circumferential portion), a sealing element 120, and a fixing element 122.

The flange face portion 116 is designed and configured to connect to a corresponding flange portion in the intermediate chamber 108.

The sealing element 120 is configured to be positioned between the shoulder portion 118 of the flange and the fixing element 122, wherein the fixing element 122 is configured for fixing the interface device 112 within the opening of the first container.

The sealing element 120 comprises a first contact surface that is configured to be attached (to be in contact) to a surface defined by the shoulder portion, and a second contact surface configured to be attached to the fixing element 122. The sealing element 120 is configured to be sandwiched between the flange (e.g. the shoulder portion) and fixing element 122 (e.g. a clamp portion of the fixing element 122).

For example, the fixing element 122 comprises a bolt and a that is fixing clamp configured to be fastened to the sealing element 120 (e.g. to the second contact surface of the sealing element 120) via the bolt.

The interface device further comprises an additional securing element 123, e.g. in the form of a carabiner or a snap hook, configured to be positioned into orifices formed in the shoulder portion of the flange and the fixing element 122. The securing element 123 conjured for providing a secure connection between the securing element 123 and the shoulder portion of the flange. This further enhances the safety of the system working under pressure.

**Fig. 6** illustrates an example side view and top view of the first filter element 124 (e.g. the filter tube) that is configured to be disposed in the second container 104 of the hydrid system 100, 200.

From the side view of the filter tubed 124 the opening of the input channel 126 is shown. In the mounted state in the second container 104, this opening communicates with the second chamber of the second container 104.

The top view partly shows the curved input channel 126 that is formed in the lumen of the filter tube 124 and the second closure element 140 for closing the input end of the input channel 126.

In **Fig. 7** an example of a first container 102 having a body 158 of a cylindrical shape is illustrated.

The body is of tube-shape, featuring a straight and uniform diameter.

The staves of rectangular shape (and identical or similar dimensions) are assembled into a tube shape and secured using adjustable hoops 160.

The tube-shape barrel of the present invention is advantageously produced without being toasted, preserving the natural composition of the wooden staves.

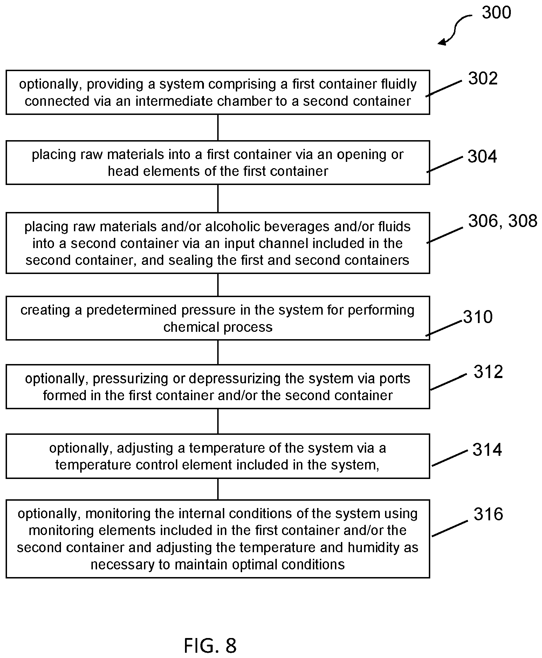

**Fig. 8** illustrates a flowchart of a method 300 for producing alcoholic beverages or fermented products, in particular using the system 100, 200 of the present inventions.

The method 300 comprises the step of, optionally, providing 302 a system 100, 200 comprising a first container 102 that is fluidly connected via an intermediate chamber 108 to a second container 108 and the step of placing 304 raw materials into a first container 102 via an opening or head elements 107 of the first container 102.

The method 300 further comprises the step of placing 304 raw materials and/or alcoholic beverages and/or fluids and/or gases into a second container 104 via an input channel 126 and/or a plurality of ports 154 of the second container 104.

Thereafter, the first and second containers 102, 104 are sealed 308. The pressure and atmosphere in the system, i.e. in the first and second containers, is set and controlled. In other words, a predetermined pressure and/or a desired atmosphere in the system during wine production process (in particular, during chemical process such as maceration, fermentation, malolactic fermentation and/or aging) is reliably maintained 310.

The method 300 further includes the following optional steps:
- pressurizing or depressurizing 312 the system via at least one port formed in the first container and/or the second container and/or in the intermediate chamber,
- adjusting 314 a temperature of the system via a temperature control element included in the system,
- monitoring 316 the internal conditions of the system using monitoring elements included in the first container and/or the second container and adjusting the temperature and humidity as necessary to maintain optimal conditions,
- introducing further fluids, non-alcoholic beverages, alcoholic beverages and/or fermentable materials into the system vis the at least one port,
- sampling the produced fermented material (product) for tasting or laboratory analysis.

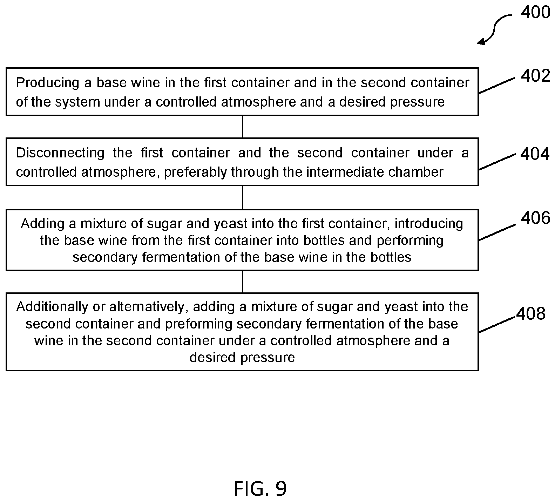

**Fig. 9** illustrates a flowchart of a method 400 for producing sparkling wines using the system 200 of the present invention.

To produce sparkling wines, at a first stage a base wine can be produces using the method 300 as explained above.

In particular, grapes are harvested, usually with a focus on higher acidity and lower sugar levels. After pressing, the juice and/or fermentable material are introduced into the first and second containers 102, 104. The first container and the second container are sealed, e.g. the inlet channel and/or the barrel heads are closed.

The atmosphere and the pressure in the system 200 are controlled as desired. Positive pressures (e.g. by introducing food-graded inert gases into the system) or negative pressures (e.g. by pumping or releasing the by-products gases from the system) are generated and maintained throughout the wine producing process as desired.

The first container 102 is in fluid communication with the second container 104 via the intermediate chamber 108. The content of the first container and the second container undergoes a primary fermentation to convert sugars into alcohol, resulting in production of a base wine under controlled environment (i.e. in the absence of contaminations, humidity and/or excess oxygen), under constant positive or negative pressure (e.g. about ± 0.1 or ± 0.2 or ± 0.5 bar) and without adding additives and/or preservatives.

In particular, throughout the production of the base wine the pressure and atmosphere of the system are controlled using the pressure control valve and inlet/outlet ports for gases.

Advantageously, the use of the hybrid system allows the production of the base wine, which includes maceration, primary fermentation, malolactic-fermentation and aging, under a constant pressure and a controlled atmosphere.

After producing 402 the base wine, the first container and the second container are disconnected 404 under a controlled atmosphere. To this end, the first and second gate valves (the fisrt and second flow control elements 146, 148) that are disposed in the intermediate chamber 108 are closed. The intermediate chamber 108 is vented via a port (a venting port) and the intermediate chamber is then disconnected to separate the first and second containers.

Advantageously while the first and second container are connected, the sediments or particles are entered through the tapered portion of the second container into the first container, thereby leaving a desired clear base wine in the second container 104. The sediments and particles are then collected by the first filter element provide in the first container 102.

According to one option, a mixture of sugar and yeast introduced 406 into the first container (i.e. the wooden barrel) and the content of the first container is then introduced into bottles. The bottles are sealed, and the process of secondary fermentation is performed in the bottles in accordance with the Traditional method.

According to another option, in the second container (i.e. the tank) a mixture of sugar and yeast is introduced 408 for initiating the process of secondary fermentation and/or aging under a constant pressure and a controlled atmosphere (e.g. 3, or 4 or 5 bar at 5 or 7 or 10 or 12 °C).

In particular, the use of the hybrid system of the present invention, enables production of sparkling wine in a more simplified and time efficient manner. The quality of the produced wine is improved as the atmosphere of the system can be reliably controlled thought the process in the first and second containers. In addition, due to the controlled atmosphere, the system allows to omit the addition of additives and/or preservatives.

The system of the present invention is specifically designed to facilitate chemical processes such as aerobic and/or anaerobic maceration, fermentation, malolactic fermentation, or aging. These processes are carried out under constant positive and/or negative pressures, with the flexibility to omit the use of additives and preservatives entirely or to add only minimal amounts. In the system of the present invention, the volume and pressure limitations of the conventional barrels are addressed. The capacity of the first container is increased via a second container (a tank) which is fluidly connected to the first container. The present invention provides for a hybrid system that allows the reliable execution of chemical processes (including aerobic and/or anaerobic maceration, fermentation (including a primary fermentation process and a secondary fermentation process), malolactic fermentation, and aging) for producing a new class of alcoholic beverages under a constant and controlled pressure. Additionally, the system of the present invention enables to mitigate leakage over time, preserving the quantity of fermentable foods or beverages and/or fermented content without the need for additional topping of new fermentable foods/beverages during the beverage-making process.

### REFERENCE NUMERALS

- 100: System
- 102: First container
- 104: Second container
- 106: Opening
- 107: Head elements
- 108: Intermediate chamber
- 110: Pressure-sealing interfaces
- 112: Interface device
- 114: Flange
- 116: Flange face portion
- 118: Shoulder portion
- 120: Sealing element
- 122: Fixing element
- 123: Securing element
- 124: Second filter element
- 126: Input channel
- 128: Fluid channel
- 130: Body portion
- 131: Tapered portion
- 132: Inlet opening
- 134: Outlet opening
- 136: Neck portion
- 138: First closure element
- 140: Second closure element
- 142: First intermediate chamber
- 144: Second intermediate chamber
- 146: First flow control element
- 148: Second first flow control element
- 150: Third intermediate chamber
- 152: Fourth intermediate chamber
- 154: A plurality of ports
- 156: At least one temperature control element
- 158: Body
- 160: Hoops
- 162: Support structure
- 300: Method
- 302: Method step
- 304: Method step
- 306: Method step
- 308: Method step
- 310: Method step
- 312: Method step
- 314: Method step
- 316: Method step
- 400: Method
- 402: Method step
- 404: Method step
- 406: Method step
- 408: Method step

- Y: Longitudinal axis

## Claims

1. A system (100, 200) for producing alcoholic beverages and fermentable products under constant pressure, in particular wine or beer or sparkling wine, comprising:
- a first container (102) including a first chamber for storing raw materials and/or fermented materials;
- a second container (104) including a second chamber for storing raw materials, alcoholic beverages and/or gases;
- wherein the first container (102), in particular via an opening (106) formed therein, is configured for fluid communication with and the second container;
- wherein the system (100) is configured to maintain a constant pressure level, during chemical processes involved in the producing the alcoholic beverages.

2. The system (100, 200) according to claim 1,
**characterized in that**
the first container (102) comprises a wooden barrel of a tube shape or a bulging shape comprising an opening and the second container (104) comprises a metallic tank configured for fluid connection with the barrel via the opening.

3. The system (100, 200) according to claims 1 or 2,
**characterized in that**
the system (100) further comprises a plurality of pressure-sealing interfaces (110) for interconnecting the first container (102) with the second container (104) and sealing openings formed on the first and/or the second containers.

4. The system (100, 200) according to any one of the preceding claims,
**characterized in that**
the second container (104) is configured to be disposed upstream from the first container (102) and to be attached, in particular via an intermediate chamber (108), to the first container (102) in a sealing manner.

5. The system (100, 200) according to any one of the preceding claims,
**characterized in that**
the system (100) further comprises an intermediate chamber (108) that is configured to be in fluid communication with the first chamber of the first container (102) and the second chamber of the second container (104) for passage of fluids therebetween, in particular the intermediate chamber (100) is configured to be disposed between the first container (102) and the second container (104) along a longitudinal axis (Y).

6. The system (100, 200) according to any one of the preceding claims,
**characterized in that**
the system (100) further comprises an interface device (112) configured to interconnect the first container (102) to an intermediate chamber or the intermediate chamber in a sealing manner and provide a fluid communication between the intermediate chamber (102) and the first container (108), in particular the interface device (112) is configured to be mounted, at one end, in an opening (106) formed in the first container (102) in a sealing manner, and to be attached, at an opposite end, to the intermediate chamber (108).

7. The system (100, 200) according to claim 6,
**characterized in that**
the interface device (112) comprises a flange (114) including a flange face portion (116) and a shoulder portion (118), a sealing element (120), and a fixing element (122), in particular the flange face portion is configured to be connected to a corresponding flange in the intermediate chamber, the sealing element is configured to be disposed between the shoulder portion of the flange and the fixing element, and the fixing element is configured to secure the interface device within the opening of the first container.

8. The system (100, 200) according to any one of the preceding claims,
**characterized in that**
the system (100) further comprises a first filter element disposed in the first container (102) and/or a second filter element (124) disposed in the second container, wherein the first filter element and/or the second filter element (124) are configured to prevent solid raw materials and/or solid fermented materials from exiting the first container (102) and the second container, respectively.

9. The system (100, 200) according to claim 8,
**characterized in that**
the second filter element (124) comprises a filter tube,
wherein the second filter element is configured to be in fluid communication, in particular via openings on the filter tube, with the second chamber of the second container, and/or
wherein the filter tube (124) comprises an input channel (126) for introducing the raw materials into the second chamber of the second container (104) and a fluid channel (128) for the passage of fluids into the first container, in particular the input channel and the fluid channel are configured to define distinct channels within the second container.

10. The system (100, 200) according to any one of the preceding claims,
**characterized in that**
the second container (104) comprises a body portion (130) extending from an inlet opening (132) to an outlet opening (134), and a neck portion (136) extending from the body portion (130), in particular the body portion (130) and the neck portion (136) define distinct and separate volumes communicating via the inlet opening.

11. The system (100, 200) according to claim 10,
**characterized in that**
the second filter element (124), in particular a filter tube, comprises an input end configured to be terminated in the neck portion of the second container (104) and an output end configured to be terminated in an intermediate chamber (108) or the intermediate chamber (106).

12. The system (200) according claims 10 or 11,
**characterized in that**
the intermediate chamber (108) is configured to define a first intermediate chamber (142) between the second container (104) and the first container, wherein the second filter element, in particular a filter tube, comprises an output end or the output end terminating in the first intermediate chamber, or **in that** the intermediate chamber (108) comprises a first flow control element (146) and a second flow control element (148) configured for controlling the passage of fluids between the first container (102) and the second container (104), wherein the second flow control element and the second container (104) are configured to define a second intermediate chamber (144) therebetween, and wherein the second filter element (124), in particular a filter tube, comprises an or the outlet end terminating in the second intermediate chamber (144).

13. The system (100, 200) according any one the preceding claims
**characterized in that**
the system (100) further comprises a plurality of ports (154) disposed in the first container (102) and/or the second container (104) and/or intermediate chamber (108), wherein the plurality of ports (154) comprises an inlet port for introducing gasses or liquids into the system (100, 200) and a pressure safety port for accommodating a pressure relief valve, and/or **in that** the system (100, 200) further comprises at least one temperature control element (156) configured to control temperature of the first container (102) and/or the second container.

14. The system (100, 200) according any one the preceding claims
**characterized in that**
the second container (104) is configured to be filled with food-grade gases up to a predetermined pressure for pressurizing the first container (102) and/or the second container (104) is configured to be pressurized for producing sparkling alcoholic beverages through a secondary fermentation, in particular the system (100, 200) is configured to perform chemical processes such as maceration, fermentation, malolactic fermentation, aging and secondary fermentation under a controlled, constant pressure.

15. A method (300) for producing alcoholic beverages or fermentable products under constant pressure and/or controlled atmosphere, in particular using the system (100) according to any one of the proceeding claims, the method comprises
- placing raw materials into a first container (102), in particular via an opening or head elements of the first container,
- placing raw materials and/or alcoholic beverages and/or fluids into a second container (104) via an input channel included in the second container,
- sealing the first and second containers,
- maintaining a predetermined pressure in the system (100, 200) for performing chemical process, in particular maceration, fermentation, malolactic fermentation and/or aging under the predetermined pressure,
- optionally, pressurizing or depressurizing the system (100, 200) via a port formed in the first or the second container,
- optionally, adjusting a temperature of the system (100, 200) via a temperature control element included in the system (100, 200),
- optionally, monitoring the internal conditions of the system (100, 200) using monitoring elements included in the first container (102) and/or the second container (104) and adjusting the temperature and humidity as necessary to maintain optimal conditions.
